# EUROPEAN PATENT APPLICATION

(11) **EP 4 481 590 A1**
(43) Date of publication of application: **25.12.2024**
(21) Application number: 23755754.1
(22) Date of filing: 13.02.2023
(51) Int. Cl.: G06F 16/9538

(54) **PAGE CONTENT DISPLAY METHOD AND DEVICE**

(30) Priority: 21.02.2022 CN 202210156619
(71) Applicant: BEIJING BYTEDANCE NETWORK TECHNOLOGY CO., LTD., Beijing 100041 (CN)
(72) Inventor: ZHENG, Linyi, Beijing 100086 (CN); WU, Yifan, Beijing 100086 (CN); CHEN, Qing, Beijing 100086 (CN); LI, Yujie, Beijing 100086 (CN); LIN, Ye, Beijing 100086 (CN); YIN, Ming, Beijing 100086 (CN); TAN, Siqi, Beijing 100086 (CN)
(74) Representative: Dentons UK and Middle East LLP
(86) International application number: PCT/CN2023/075693
(87) International publication number: WO 2023/155752

(57) **Abstract**

The present disclosure relates to the field of page content displaying, and said disclosure relates to a page content display method and device. The display method comprises: displaying current image content in a content browsing page, the current image content being first content in a content stream; in response to a content browsing user performing interaction, displaying relevant text information of the current image content; and during display of the relevant text information, in response to the content browsing user performing interaction again, displaying second content in the content stream, the second content being different from the first content.

## Description

### CROSS-REFERENCE TO RELATED APPLICATIONS

The present application is based on the application with a CN application number of 202210156619.6 and the filing date being February 21, 2022 and claims its priority. The disclosure of this CN application as a whole is incorporated into the present application herein by reference.

### TECHNICAL FIELD

The present disclosure relates to the field of display technology, and in particular, to a method for displaying page contents, an apparatus for displaying page contents, and a non-transitory computer-readable storage medium.

### BACKGROUND

The graphics and text content refer to image contents and relevant supplementary text descriptions posted by content posting users. In a full-screen single-list content stream, graphics and text contents and video contents can be arranged in a mixed manner and presented to content browsing users.

### SUMMARY

According to some embodiments of the present disclosure, a method of displaying page contents is provided, comprising: displaying a current image content in a content browsing page, wherein the current image content is a first content in a content stream; displaying relevant text information of the current image content in response to an interaction performed by a content browsing user; during the display process of the relevant text information, in response to an interaction performed again by the content browsing user, displaying a second content different from the first content in the content stream.

According to some embodiments of the present disclosure, a display apparatus of page contents is provided, comprising: an image display unit for displaying a current image content in a content browsing page, wherein the current image content is a first content in a content stream; a text display unit for displaying relevant text information of the current image content in response to an interaction performed by a content browsing user; a display switching unit for, during the display process of the relevant text information, in response to an interaction performed again by the content browsing user, displaying a second content different from the first content in the content stream. For example, the second content is independent of the first content

According to some other embodiments of the present disclosure, a display apparatus of page contents is provided, comprising: memory; a processor coupled to the memory, the processor configured to, based on instructions stored in the memory, carry out the display method of page contents according to any one of the above embodiments.

According to still other embodiments of the present disclosure, there is provided a non-transitory computer readable storage medium having stored thereon a computer program that, when executed by a processor, implements the display method of page contents according to any one of the above embodiments.

According to still other embodiments of the present disclosure, there is provided a computer program, comprising: instructions which, when executed by a processor, cause the processor to perform the display method of page contents according to any one of the above embodiments.

### BRIEF DESCRIPTION OF THE DRAWINGS

The accompanying drawings, which are incorporated in and constitute a portion of this specification, illustrate embodiments of the present disclosure and, together with the description, serve to explain the principles of the present disclosure.

The present disclosure will be more clearly understood from the following detailed description with reference to the accompanying drawings, in which:
FIG. 1 shows a flowchart of some embodiments of a method for displaying page contents of the present disclosure;
FIGS. 2a to 2g show schematic diagrams of some embodiments of the method for displaying page contents of the present disclosure;
FIGS. 3a to 3f show schematic diagrams of other embodiments of the method for displaying page contents of the present disclosure;
FIGS. 4a to 4d show schematic diagrams of still other embodiments of the method for displaying page contents of the present disclosure;
FIG. 5 shows a block diagram of some embodiments of an apparatus for displaying page contents of the present disclosure;
FIG. 6 shows a block diagram of other embodiments of the apparatus for displaying page contents of the present disclosure;
FIG. 7 shows a block diagram of still other embodiments of the apparatus for displaying page contents of the present disclosure.

### DETAILED DESCRIPTION

Various exemplary embodiments of the present disclosure will now be described in detail with reference to the accompanying drawings. Notice that, Unless otherwise specified, the relative arrangement, numerical expressions and numerical values of the components and steps set forth in these examples do not limit the scope of the invention.

At the same time, it should be understood that, for ease of description, the dimensions of the various parts shown in the drawings are not drawn to actual proportions.

The following description of at least one exemplary embodiment is in fact merely illustrative and is in no way intended as a limitation to the invention, its application or use.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an article is defined in a drawing, there is no need for further discussion in the accompanying drawings.

As mentioned above, in a full-screen single-list content stream, graphics and text contents and video contents can be arranged in a mixed manner. However, this will make content browsing users feel that the content switching is incoherent when they alternately scroll through graphics text contents and video contents. Therefore, content switching of contents in the content stream is not smooth, and the content push efficiency is low.

Moreover, content browsing users cannot quickly identify that graphics text contents and video contents are two different content forms. Thus, their user experience will be degraded.

The inventors of the present disclosure have found the following problem existed in the related art: not smooth content switching and low content push efficiency.

In view of this, the present disclosure provides a technical solution for displaying page contents, which can smoothly switch contents and improve content push efficiency.

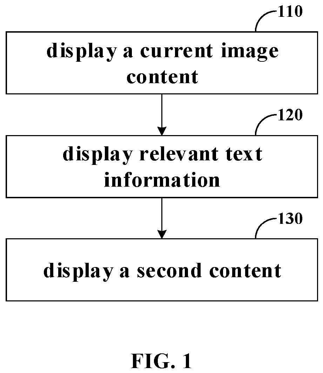

FIG. 1 shows a flowchart of some embodiments of a method for displaying page contents of the present disclosure.

As shown in FIG. 1, in step 110, a current image content is displayed in a content browsing page, wherein the current image content is a first content in a content stream. For example, the content stream may comprise a plurality of contents such as graphics and text contents and video contents. A graphics and text content may comprise at least one image content and its relevant text information.

In step 120, the relevant text information of the current image content is displayed in response to an interaction performed by a content browsing user. For example, in response to an interaction performed by the content browsing user, a new page is displayed and the relevant text information is displayed in the new page.

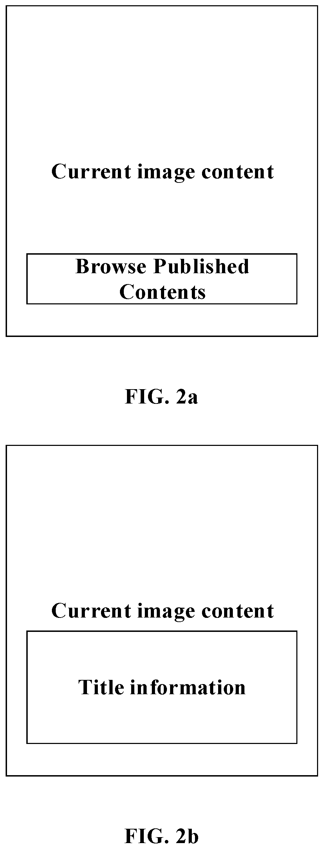

In some embodiments, title information of the current image content is displayed in response to a first interaction operation of the content browsing user. For example, FIGS. 2a and 2b illustrate some embodiments implementing the above steps.

FIGS. 2a to 2b show schematic diagrams of some embodiments of a method for displaying page contents of the present disclosure.

As shown in FIG. 2a, a current image content and a Browse Posted Contents control (such as, a button or the like) are displayed in a content browsing page. The content browsing user can perform a first interaction operation (such as, clicking or the like) on the Browse Posted Contents control to read the relevant text information.

As shown in FIG. 2b, in response to the content browsing user performing the first interaction operation on the Browse Posted Contents control, title information of the current image content is displayed in the content browsing page. For example, the current image content can also be displayed in the content browsing page simultaneously.

In this way, through displaying the title information to arouse the interest of content browsing user to read the relevant text information, the efficiency of content push can be improved.

In some embodiments, existing comment information or description information of the current image content is displayed in response to a second interaction operation of the content browsing user (such as, sliding up or clicking on a specified area or the like). For example, whether to display existing comment information or description information is determined according to preference information of the content browsing user.

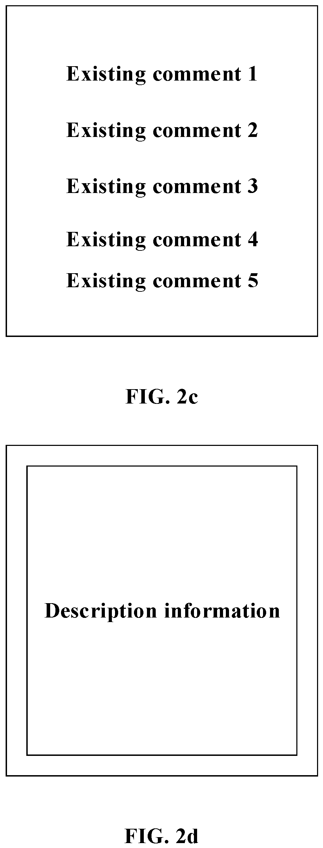

For example, FIGS. 2c and 2d illustrate some embodiments implementing the above steps.

FIGS. 2c to 2d show schematic diagrams of some embodiments of a method for displaying page contents of the present disclosure.

As shown in FIG. 2c, in response to the content browsing user sliding up on the title information display interface, existing comment information (existing comments 1 to 5) of the current image content is displayed.

As shown in FIG. 2d, in response to the content browsing user sliding up on the title information display interface, description information of the current image content is displayed.

In this way, text contents (comment information or description information) that the user is interested in can be pushed according to the user's preference, thereby improving the efficiency of content push.

After the relevant text information of the current image content is displayed, page contents can be displayed continuously through the remaining steps in FIG. 1.

In step 130, during the display process of the relevant text information, in response to an interaction performed again by the content browsing user, a second content different from the first content in the content stream is displayed. For example, the second content may be the next graphics and text content or video content in the content stream.

In some embodiments, the second content is independent of the first content. For example, the first content is a graphics and text content, and the second content is another graphics and text content independent of the first content; the first content is a graphics and text content, and the second content is a video content independent of the first content. For example, the second content and the first content may also be two contents that have no relationship with each other.

In some embodiments, in the case of sliding the content browsing page to the bottom of the existing comment information or description information, in response to the content browsing user performing a sliding operation again (e.g., sliding in a specified direction such as downward or upward) or other types of interaction operations, a second content is displayed.

For example, in the case of sliding the content browsing page to the bottom of the existing comment information or the description information, in response to a clicking operation performed again by the content browsing user, a second content is displayed. For example, the clicking operation may be an operation of clicking on a specified area.

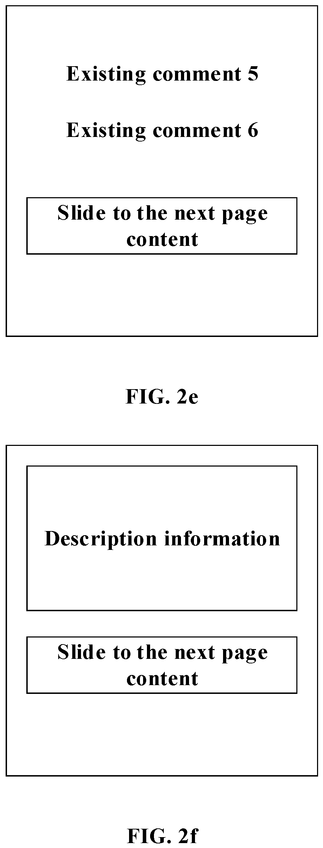

For example, FIGS. 2e to 2g illustrate some embodiments implementing the above steps.

FIGS. 2e to 2g show schematic diagrams of some embodiments of the method for displaying page contents of the present disclosure.

As shown in FIG. 2e, in response to the content browsing user sliding up in the comment information display area and reaching the bottom of the comment information display area, a message prompting the user to switch page content (such as, "Slide to the next page content") is displayed. For example, the user may be prompted to continue to slide up to browse the next page content.

As shown in FIG. 2f, in response to the content browsing user sliding up in the description information display area and reaching the bottom of the description information display area, a message prompting the user to switch page content (such as, "Slide to the next page content") is displayed. For example, the user may be prompted to continue to slide up to browse the next page content.

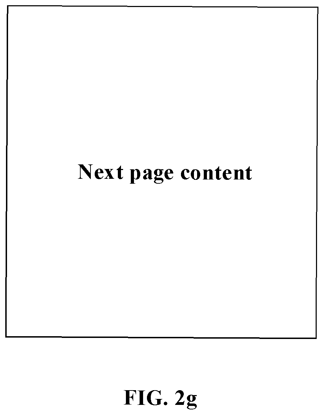

As shown in FIG. 2g, in response to a continuous slide up operation of the user, the next page content (such as, a text content or video content) is displayed.

In the above embodiment, page content switching is performed in response to an interaction operation performed by the user in the process of browsing the relevant text content of the image content. In this way, graphics and text contents and video contents can be switched directly and smoothly, thereby improving the content push efficiency and user experience.

In some embodiments, when the content browsing user is browsing a full-screen displayed graphics and text content, the user can conveniently exit the full-screen displayed comment information or description information in other ways instead of a slide up operation, so as to enter the next page content.

In some embodiments, during the display process of the relevant text information, in response to a third interaction operation of the content browsing user, the existing comment information or description information of the current image content is closed, and the current image content is displayed, wherein the third interaction operation is different from the second interaction operation. For example, the second interaction operation comprises a sliding operation, and the third interaction operation is a clicking operation or a sliding operation in a direction different from that of the second interaction operation.

For example, if a content browsing user browses the comment information or description information by a slide up operation, content browsing user can close the browsed comment information or description information by a slide down operation or clicking a specified area during the browsing process.

For example, after closing the browsed comment information or description information, the display of the current image content can be recovered, or the display can be directly switched to the next image content or video content.

In this way, the content browsing user can close the relevant text information at any time when browsing the relevant text information of the graphics and text content, thereby improving the efficiency of content push.

In some embodiments, in response to the content browsing user selecting a View Comments control, the content displayed in the content browsing page is determined according to whether the content browsing page has reached a comment area.

For example, in the case that the content browsing page is not slid to a comment area, a comment area is displayed in the content browsing page. For example, in the case that the current image content has at least one piece of existing comment information, the content browsing page is slid to a piece of existing comment information located at the top of the comment area.

For example, in the case that the content browsing page has been slid to the comment area, a comment input interface is displayed in the content browsing page.

In some embodiments, when the content browsing user clicks a comment icon in a situation that the current image content has comment information; if the current page is not slid to the comment area, the current page is positioned to the first comment; and if the current page has been slid to the comment area, a comment input panel is displayed. For example, at the bottom of the comment area, the user can be prompted to slide to display the next page content.

In some embodiments, when the content browsing user clicks the comment icon in a situation that the current image content has no comment information, if the current page is not slid to the comment area, the current page is positioned to the comment area; and if the current page has been slid to the comment area, a comment input panel is displayed. For example, at the bottom of the comment area, the user can be prompted to slide to display the next page content.

In some embodiments, when the content browsing user clicks on a comment box, a comment input panel is displayed, in which the content browsing user can post a comment. For example, for a content browsing user who is posting the comment, the comment is displayed as the first comment after the pinned comments, and the number of comments of the current image content is increased by 1.

In some embodiments, if the content browsing user clicks on the avatar or name of the author of a comment, the author's personal homepage can be displayed; if the content browsing user gives a like to a comment, a Like icon of the comment changes color and an animation effect is displayed. Moreover, the number of likes for the comment is increased by 1.

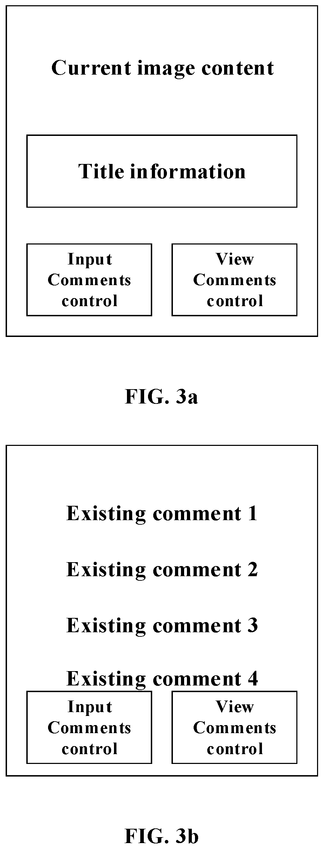

For example, FIGS. 3a to 3c illustrate some embodiments implementing the above steps.

FIGS. 3a to 3c show schematic diagrams of other embodiments of the method for displaying page contents of the present disclosure.

As shown in FIG. 3a, a current image content and its title information are displayed in the content browsing page, which is not slid to the comment area. An Input Comments control (such as, a comment input box) and a View Comments control (such as, a comment viewing button) are also displayed in the content browsing page. The View Comments control can be selected (such as, clicked) by the content browsing user.

As shown in FIG. 3b, in response to the content browsing user selecting the View Comments control, the content browsing page can be slid to the first comment in the comment area (e.g., the hottest existing comment 1). If there are no comments, the content browsing page can be slid to the comment area and the user can be prompted that there are no comments. The View Comments control can be selected (such as, clicked) by the content browsing user.

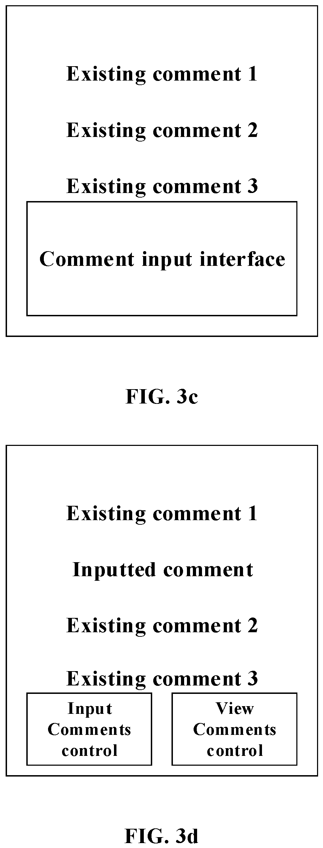

As shown in FIG. 3c, in response to the content browsing user selecting the View Comments control, a comment input interface is displayed. For example, the text input panel can be displayed to be slid up from the bottom.

In some embodiments, in response to the content browsing user inputting comment information of the current image content, the comment information is displayed below and adjacent to the pinned comment information.

For example, as shown in FIG. 3d, after the content browsing user inputs a comment, the inputted comment can be displayed below a pinned comment (existing comment 1).

In this way, the content browsing user can see that the comment entered by himself is located in a prominent position in the comment area, and the user is encouraged to post more comments, thereby improving the efficiency of content push.

In some embodiments, in response to a content browsing user selecting the Input Comments control, a comment input panel is displayed in the content browsing page.

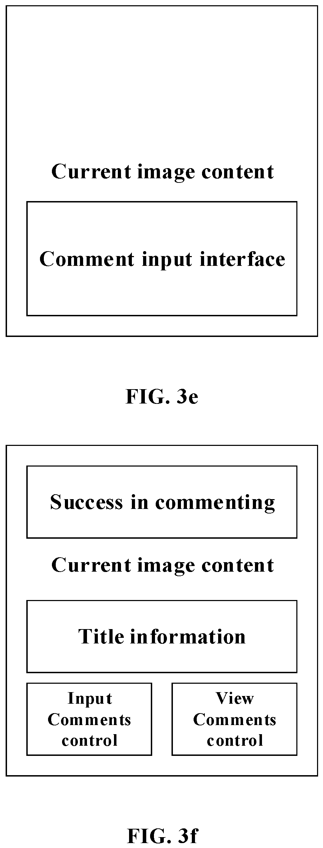

As shown in FIG. 3e, in response to the content browsing user selecting the Input Comments control in the page shown in FIG. 3a, a comment input interface is displayed. For example, the text input panel can be displayed to be slid up from the bottom. As shown in FIG. 3f, in response to the content browsing user inputting a comment, a prompt message indicating that a comment has been successfully posted may be displayed on the page of FIG. 3a.

In some embodiments, in a content posting page, a text input area is displayed for inputting description information of an image content to be posted; in response to a fourth interaction operation performed by a content posting user on the text input area, it is prompted to input title information of the image content to be posted in the text input area.

In some embodiments, a prompt for entering detailed description information and a prompt for entering brief title information are displayed in the text input area, respectively. For example, the text input area only displays a prompt for entering detailed description information by default; after the content posting user clicks the text input area to proceed to a description information editing process, the text input area displays a prompt for entering brief title information.

In some embodiments, the text input area has a first area as a default size; the content posting user clicks an enlarging control to enlarge the size of the text input area from the first area to a second area (e.g., the text input area is enlarged to full screen).

In some embodiments, the content posting user can long press one of thumbnails shown in an image selection bar, and adjust the display order of images corresponding to the thumbnails in the graphics and text content by sliding left and right.

In some embodiments, before the content posting user selects a cover image for the graphics and text content, an image corresponding to the first thumbnail in the image selection bar is used as the cover by default; after the content posting user selects a cover image for the graphics and text content, the thumbnail of the cover image is marked; a control for selecting the cover image can be placed below the first thumbnail in the image selection bar.

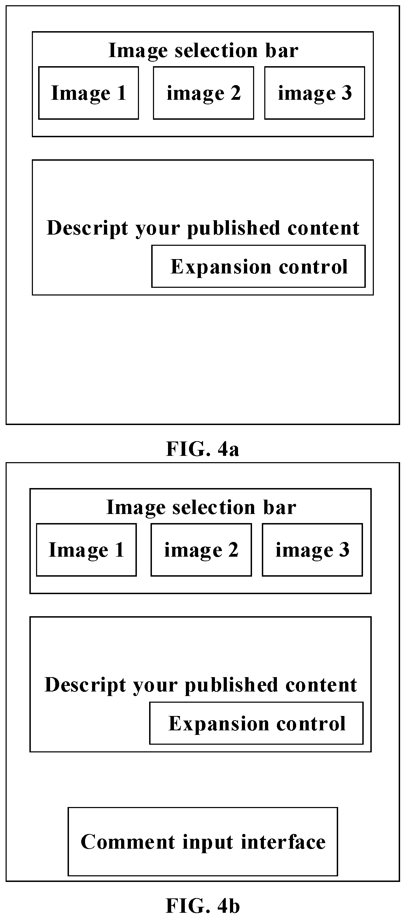

For example, FIGS. 4a to 4d illustrate some embodiments implementing the above steps.

FIGS. 4a to 4d show schematic diagrams of still other embodiments of the method for displaying page contents of the present disclosure.

As shown in FIG. 4a, on a content posting page, an image selection bar is displayed, and a plurality of images are displayed in the image selection bar. A content posting user can click an image shown in the image selection bar to select the image content to be displayed in the graphics and text content and its display order (such as, a cover image, etc.), and can switch to display different images by sliding the images shown in the image selection bar.

Information for prompting the content posting user to input a posted content can be displayed in a text input area of the content posting page (such as, "Describe posted content"), and an Expansion control can also be displayed.

As shown in FIG. 4b, in response to the user clicking on the text input area, information for prompting the content posting user to input a title (e.g., "Title of posted image") may be displayed in the text input area, and a comment input interface may be displayed.

In this way, the user can try to input shorter title information instead of inputting longer description information, which can improve the user's motivation to input text information for image information, thereby improving the efficiency of content push.

In some embodiments, in response to the content posting user selecting a function of enlarging the text input area, the coverage area of the text input area in the content posting page is enlarged.

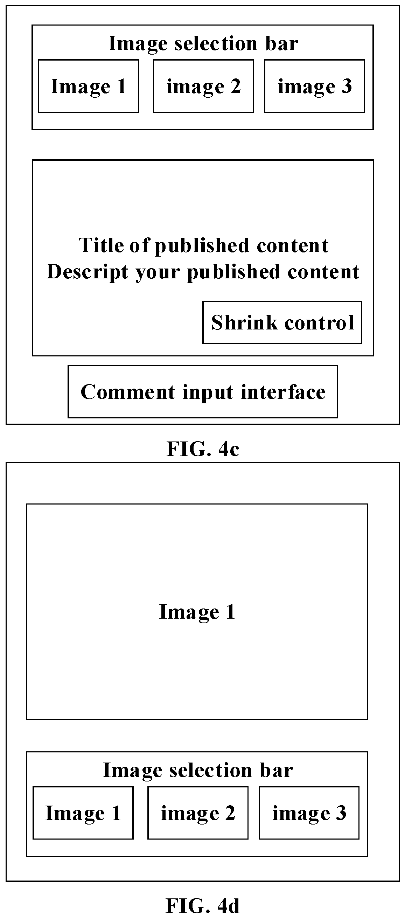

As shown in FIG. 4c, in the content posting page, in response to the content posting user clicking the enlarging control, the coverage area of the text input area in the content posting page is enlarged. A Shrink control can also be displayed for shrink the text input area.

In this way, the user can edit text information to be posted in a larger area, which can improve the user's motivation to input text information for the image information, thereby improving the efficiency of content push.

As shown in FIG. 4d, in response to the content posting user selecting image 1 in the page of FIG. 4a, an enlarged image 1 may be displayed in the content posting page. For example, in response to the content posting user selecting another image in the image selection bar, another image may be displayed in an enlarged manner.

In the above embodiment, the switching of page content is performed in response to an interaction operation performed by the user in the process of browsing the relevant text content of the image content. In this way, graphics and text contents and video contents can be switched directly and smoothly, thereby improving the content push efficiency and user experience.

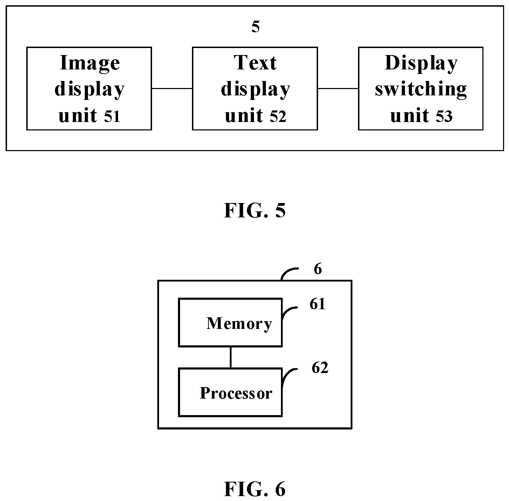

FIG. 5 shows a block diagram of some embodiments of an apparatus for displaying page contents of the present disclosure.

As shown in FIG. 5, apparatus 5 for displaying page contents in a content browsing page comprises: an image display unit 51 for displaying a current image content in a content browsing page, wherein the current image content is a first content in a content stream; a text display unit 52 for displaying relevant text information of the current image content in response to an interaction performed by a content browsing user; a display switching unit 53 for, during the display process of the relevant text information, in response to an interaction performed again by the content browsing user, displaying a second content different from the first content in the content stream.

In some embodiments, the text display unit 52 displays title information of the current image content in response to a first interaction operation of the content browsing user, and displays existing comment information or description information of the current image content in response to a second interaction operation of the content browsing user.

In some embodiments, the text display unit 52 determines whether to display existing comment information or description information according to preference information of the content browsing user.

In some embodiments, in the case of sliding (the content browsing page) to the bottom of the existing comment information or the description information, in response to a sliding operation performed again by the content browsing user, the display switching unit 53 displays a second content.

In some embodiments, during the display process of the relevant text information, in response to a third interaction operation of the content browsing user, the display switching unit 53 closes the existing comment information or description information of the current image content, and displays the current image content, wherein the third interaction operation is different from the second interaction operation.

In some embodiments, the second interaction operation comprises a sliding operation, and the third interaction operation comprises a clicking operation or a sliding operation in a direction different from that of the second interaction operation.

For example, in response to an interaction performed by the content browsing user, the text display unit 52 displays a new page and displays the relevant text information in the new page.

In some embodiments, in response to the content browsing user selecting a View Comments control, the text display unit 52 determines the content displayed in the content browsing page according to whether the content browsing page has reached a comment area.

In some embodiments, in the case that the content browsing page is not slid to a comment area, the text display unit 52 displays a comment area in the content browsing page; in the case that the content browsing page has reached a comment area, displays a comment input interface in the content browsing page.

In some embodiments, in the case that the current image content has at least one piece of existing comment information, the text display unit 52 slides the content browsing page to a piece of existing comment information located at the top of the comment area.

In some embodiments, in response to a content browsing user selecting an Input Comments control, the text display unit 52 displays a comment input panel in the content browsing page.

In some embodiments, in response to the content browsing user inputting comment information of the current image content, the text display unit 52 displays the comment information below and adjacent to pinned comment information.

In some embodiments, the text display unit 52 displays a text input area in a content posting page for inputting description information of an image content to be posted; in response to a fourth interaction operation performed by a content posting user on the text input area, prompts to input title information of an image content to be posted in the text input area.

In some embodiments, in response to the content posting user selecting a function of enlarging the text input area, the text display unit 52 enlarges the coverage area of the text input area in the content posting page.

According to some embodiments of the present disclosure, a method of displaying page contents is provided, comprising: displaying a current image content in a content browsing page, wherein the current image content is a first content in a content stream; displaying relevant text information of the current image content in response to an interaction performed by a content browsing user; during the display process of the relevant text information, in response to an interaction performed again by the content browsing user, displaying a second content different from the first content in the content stream.

In some embodiments, displaying the relevant text information of the current image content in response to an interaction performed by a content browsing user comprises: displaying title information of the current image content in response to a first interaction operation of the content browsing user; displaying existing comment information or description information of the current image content in response to a second interaction operation of the content browsing user.

In some embodiments, displaying existing comment information or description information of the current image content in response to a second interaction operation of the content browsing user comprises: determining whether to display existing comment information or description information according to preference information of the content browsing user.

In some embodiments, during the display process of the relevant text information, in response to an interaction performed again by the content browsing user, displaying a second content in the content stream comprises: in the case of sliding (the content browsing page) to the bottom of the existing comment information or the description information, in response to a sliding operation performed again by the content browsing user, displaying a second content.

In some embodiments, displaying the relevant text information of the current image content in response to an interaction performed by a content browsing user comprises: in response to an interaction performed by the content browsing user, displaying a new page and displaying the relevant text information in the new page.

In some embodiments, the display method further comprises: during the display process of the relevant text information, in response to a third interaction operation of the content browsing user, closing the existing comment information or description information of the current image content, and displaying the current image content, wherein the third interaction operation is different from the second interaction operation.

In some embodiments, the second interaction operation comprises a sliding operation, and the third interaction operation comprises a clicking operation or a sliding operation in a direction different from that of the second interaction operation.

In some embodiments, the display method further comprises: in response to the content browsing user selecting a View Comments control, determining the content displayed in the content browsing page according to whether the content browsing page has reached a comment area.

In some embodiments, in response to the content browsing user selecting a View Comments control, determining the content displayed in the content browsing page according to whether the content browsing page has reached a comment area comprises: in the case that the content browsing page is not slid to a comment area, displaying a comment area in the content browsing page; in the case that the content browsing page has reached a comment area, displaying a comment input interface in the content browsing page.

In some embodiments, in the case that the content browsing page is not slid to a comment area, displaying a comment area in the content browsing page comprises: in the case that the current image content has at least one piece of existing comment information, sliding the content browsing page to a piece of existing comment information located at the top of the comment area.

In some embodiments, the display method further comprises: in response to the content browsing user selecting an Input Comments control, displaying a comment input panel in the content browsing page.

In some embodiments, the display method further comprises: in response to the content browsing user inputting comment information of the current image content, displaying the comment information below and adjacent to pinned comment information.

In some embodiments, the display method further comprises: in a content posting page, displaying a text input area for inputting description information of an image content to be posted; in response to a fourth interaction operation performed by a content posting user on the text input area, it is prompted to input title information of an image content to be posted in the text input area.

In some embodiments, the display method further comprises: in response to the content posting user selecting a function of enlarging the text input area, enlarging coverage area of the text input area in the content posting page.

According to some embodiments of the present disclosure, an apparatus of displaying contents in a content browsing page is provided, comprising: an image display unit for displaying a current image content in a content browsing page, wherein the current image content is a first content in a content stream; a text display unit for displaying relevant text information of the current image content in response to an interaction performed by a content browsing user; a display switching unit for, during the display process of the relevant text information, in response to an interaction performed again by the content browsing user, displaying a second content different from the first content in the content stream.

In some embodiments, the text display unit displays title information of the current image content in response to a first interaction operation of the content browsing user, and displays existing comment information or description information of the current image content in response to a second interaction operation of the content browsing user.

In some embodiments, the text display unit determines whether to display existing comment information or description information according to preference information of the content browsing user.

In some embodiments, in the case of sliding (the content browsing page) to the bottom of the existing comment information or the description information, in response to a sliding operation performed again by the content browsing user, the display switching unit displays a second content.

In some embodiments, in response to an interaction performed by the content browsing user, the text display unit displays a new page, and displays the relevant text information in the new page.

In some embodiments, during the display process of the relevant text information, in response to a third interaction operation of the content browsing user, the display switching unit closes the existing comment information or description information of the current image content, and displays the current image content, wherein the third interaction operation is different from the second interaction operation.

In some embodiments, the second interaction operation comprises a sliding operation, and the third interaction operation comprises a clicking operation or a sliding operation in a direction different from that of the second interaction operation.

In some embodiments, in response to the content browsing user selecting a View Comments control, the text display unit determines the content displayed in the content browsing page according to whether the content browsing page has reached a comment area.

In some embodiments, in the case that the content browsing page is not slid to a comment area, the text display unit displays a comment area in the content browsing page; in the case that the content browsing page has reached a comment area, displays a comment input interface in the content browsing page.

In some embodiments, in the case that the current image content has at least one piece of existing comment information, the text display unit slides the content browsing page to a piece of existing comment information located at the top of the comment area.

In some embodiments, in response to a content browsing user selecting an Input Comments control, the text display unit displays a comment input panel in the content browsing page.

In some embodiments, in response to the content browsing user inputting comment information of the current image content, the text display unit displays the comment information below and adjacent to pinned comment information.

In some embodiments, the text display unit displays a text input area in a content posting page for inputting description information of an image content to be posted; in response to a fourth interaction operation performed by a content posting user on the text input area, prompts to input title information of an image content to be posted in the text input area.

In some embodiments, in response to the content posting user selecting a function of enlarging the text input area, the text display unit enlarges the coverage area of the text input area in the content posting page.

According to still other embodiments of the present disclosure, there is provided a computer program, comprising: instructions which, when executed by a processor, cause the processor to perform the display method of page contents according to any one of the above embodiments.

FIG. 6 shows a block diagram of other embodiments of the apparatus for displaying page contents of the present disclosure.

As shown in FIG. 6, the apparatus 6 of this embodiment comprises: memory 61 and a processor 62 coupled to the memory 61, the processor 62 configured to, based on instructions stored in the memory 61, carry out the method of displaying page contents according to any one of the embodiments of the present disclosure.

Wherein, the memory 61 may comprise, for example, system memory, a fixed non-transitory storage medium, or the like. The system memory stores, for example, an operating system, applications, a boot loader, a database, and other programs.

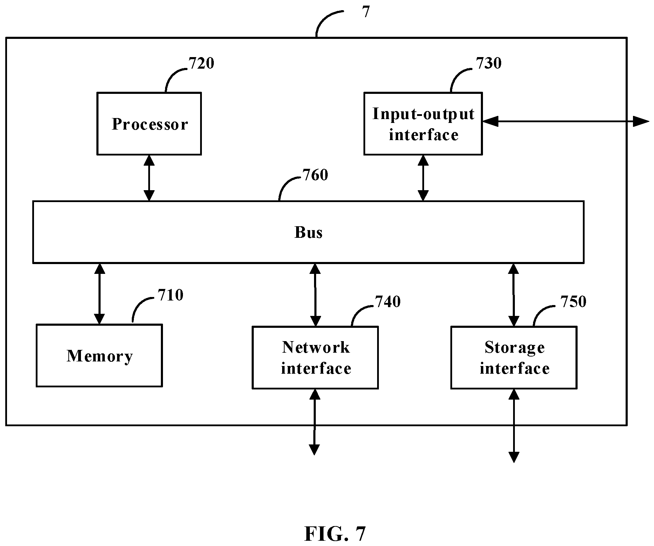

FIG. 7 shows a block diagram of still other embodiments of the apparatus for displaying page contents of the present disclosure.

As shown in FIG. 7, the apparatus 7 for displaying page contents of this embodiment comprises: memory 710 and a processor 720 coupled to the memory 710, the processor 720 configured to, based on instructions stored in the memory 710, carry out the method of displaying page contents according to any one of the embodiments of the present disclosure.

The memory 710 may comprise, for example, system memory, a fixed non-transitory storage medium, or the like. The system memory stores, for example, an operating system, application programs, a boot loader (Boot Loader), and other programs.

The apparatus 7 for displaying page contents may further comprise an input-output interface 730, a network interface 740, a storage interface 750, and the like. These interfaces 730, 740, 750 and the memory 710 and the processor 720 may be connected through a bus 760, for example. Wherein, the input-output interface 730 provides a connection interface for input-output devices such as a display, a mouse, a keyboard, a touch screen, a microphone, a loudspeaker, etc. The network interface 640 provides a connection interface for various networked devices. The storage interface 750 provides a connection interface for external storage devices such as an SD card and a USB flash disk.

Those skilled in the art should understand that the embodiments of the present disclosure may be provided as a method, a system, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (comprising but not limited to disk storage, CD-ROM, optical memory, etc.) having computer-usable program code embodied therein.

Heretofore, the method for displaying page contents, the apparatus for displaying page contents, and the non-transitory computer-readable storage medium according to the present disclosure have been described in detail. In order to avoid obscuring the concepts of the present disclosure, some details known in the art are not described. Based on the above description, those skilled in the art can understand how to implement the technical solutions disclosed herein.

The method and system of the present disclosure may be implemented in many ways. For example, the method and system of the present disclosure may be implemented by software, hardware, firmware, or any combination of software, hardware, and firmware. The above sequence of steps of the method is merely for the purpose of illustration, and the steps of the method of the present disclosure are not limited to the above-described specific order unless otherwise specified. In addition, in some embodiments, the present disclosure may also be implemented as programs recorded in a recording medium, which comprise machine-readable instructions for implementing the method according to the present disclosure. Thus, the present disclosure also covers a recording medium storing programs for executing the method according to the present disclosure.
Although some specific embodiments of the present disclosure have been described in detail by way of example, those skilled in the art should understand that the above examples are only for the purpose of illustration and are not intended to limit the scope of the present disclosure. It should be understood by those skilled in the art that the above embodiments may be modified without departing from the scope and spirit of the present disclosure. The scope of the disclosure is defined by the following claims.

## Claims

1. A display method of page contents, comprising:
displaying a current image content in a content browsing page, wherein the current image content is a first content in a content stream;
displaying relevant text information of the current image content in response to an interaction performed by a content browsing user; and
displaying a second content different from the first content in the content stream, during a display process of the relevant text information, in response to an interaction performed again by the content browsing user.

2. The display method according to claim 1, wherein displaying relevant text information of the current image content in response to an interaction performed by a content browsing user comprises:
displaying title information of the current image content in response to a first interaction operation of the content browsing user; and
displaying existing comment information or description information of the current image content in response to a second interaction operation of the content browsing user.

3. The display method according to claim 2, wherein displaying existing comment information or description information of the current image content in response to a second interaction operation of the content browsing user comprises:
determining whether to display the existing comment information or the description information according to preference information of the content browsing user.

4. The display method according to claim 2, wherein during the display process of the relevant text information, in response to an interaction performed again by the content browsing user, displaying a second content in the content stream comprises:
displaying the second content, in response to a bottom of the existing comment information or the description information being reached, and in response to a sliding operation performed again by the content browsing user.

5. The display method according to claim 2, further comprising:
closing the existing comment information or the description information of the current image content, and displaying the current image content, during the display process of the relevant text information, in response to a third interaction operation of the content browsing user, wherein the third interaction operation is different from the second interaction operation.

6. The display method according to claim 5, wherein the second interaction operation comprises a sliding operation, and the third interaction operation comprises a clicking operation or a sliding operation in a direction different from that of the second interaction operation.

7. The display method according to any of claims 1 to 6, wherein displaying relevant text information of the current image content in response to an interaction performed by a content browsing user comprises:
displaying a new page and displaying the relevant text information in the new page, in response to an interaction performed by the content browsing user.

8. The display method according to any of claims 1 to 6, further comprising:
determining the content displayed in the content browsing page according to whether the content browsing page has reached a comment area, in response to the content browsing user selecting a View Comments control.

9. The display method according to claim 8, wherein in response to the content browsing user selecting a View Comments control, determining the content displayed in the content browsing page according to whether the content browsing page has reached a comment area comprises:
displaying the comment area in the content browsing page, in response to the content browsing page being not slid to the comment area; and
displaying a comment input interface in the content browsing page, in response to the content browsing page being slid to the comment area.

10. The display method according to claim 9, wherein in response to the content browsing page being not slid to the comment area, displaying the comment area in the content browsing page comprises:
sliding the content browsing page to a piece of existing comment information located at a top of the comment area, in response to the current image content having at least one piece of existing comment information.

11. The display method according to any of claims 1 to 6, further comprising:
displaying a comment input panel in the content browsing page in response to the content browsing user selecting an Input Comments control.

12. The display method according to any of claims 1 to 6, further comprising:
displaying comment information below and adjacent to pinned comment information, in response to the content browsing user inputting the comment information of the current image content.

13. The display method according to any of claims 1 to 12, further comprising:
displaying a text input area for inputting description information of an image content to be posted, in a content posting page; and
prompting to input title information of the image content to be posted in the text input area, in response to a fourth interaction operation performed by a content posting user on the text input area.

14. The display method according to claim 13, further comprising:
enlarging coverage area of the text input area in the content posting page, in response to the content posting user selecting a function of enlarging the text input area.

15. The display method according to any of claims 1 to 12, wherein the second content is independent of the first content.

16. An apparatus for displaying page contents in a content browsing page, comprising:
an image display unit for displaying a current image content in a content browsing page, wherein the current image content is a first content in a content stream;
a text display unit for displaying relevant text information of the current image content in response to an interaction performed by a content browsing user; and
a display switching unit for, during the display process of the relevant text information, in response to an interaction performed again by the content browsing user, displaying a second content different from the first content in the content stream.

17. A display apparatus of page contents, comprising:
memory; and
a processor coupled to the memory, the processor configured to, based on instructions stored in the memory, carry out a display method of page contents according to any of claims 1 to 15.

18. A non-transitory computer-readable storage medium on which a computer program is stored, which when executed by a processor implements a display method of page contents according to any of claims 1 to 15.

19. A computer program, comprising:
instructions which, when executed by a processor, cause the processor to perform a display method of page contents according to any of claims 1 to 15.
